(19) Europäisches Patentamt

European Patent Office

Office européen des brevets

(11) Veröffentlichungsnummer: **0 298 208 B1**

(12) **EUROPÄISCHE PATENTSCHRIFT**

(45) Veröffentlichungstag der Patentschrift: **07.04.93**

(21) Anmeldenummer: **88106247.5**

(22) Anmeldetag: **20.04.88**

(51) Int. Cl.⁵: **C08J 5/18**, C08L 27/06, C08L 51/06, B32B 27/30

(54) **Butadienfreie Folie und Verfahren zur Herstellung derselben.**

(30) Priorität: **08.07.87 DE 3722471**

(43) Veröffentlichungstag der Anmeldung:
**11.01.89 Patentblatt 89/02**

(45) Bekanntmachung des Hinweises auf die
Patenterteilung:
**07.04.93 Patentblatt 93/14**

(84) Benannte Vertragsstaaten:
**AT BE CH DE ES FR GB GR IT LI LU NL SE**

(56) Entgegenhaltungen:
**EP-A- 0 099 455**
**EP-A- 0 101 899**

(73) Patentinhaber: **ALKOR GMBH KUNSTSTOFFE**
**Morgensternstrasse 9 Postfach 71 01 09**
**W-8000 München 71(DE)**

(72) Erfinder: **Fink, Roland, Dipl.-Ing.**
**Dinardstrasse 66**
**W-8130 Starnberg(DE)**
Erfinder: **Huber-Hesselberger, Josef ,**
**Dipl.-Ing. (FH)**
**Behringstrasse 113**
**W-8000 München 50(DE)**

**Beschreibung**

Die vorliegende Erfindung betrifft eine Folie, insbesondere Folie für Kraftfahrzeuginnenräume sowie ein Verfahren zur Herstellung derselben. Die Folie oder Folienbahn hat eine Foliendicke von 250 $\mu$m - 1.800 $\mu$m, vorzugsweise 500 $\mu$m - 1.200 $\mu$m, und besteht aus Kunststoffmischungen oder -legierungen von 25 - 59 Gew.-% (bezogen auf 100 Gew.-% des Polymergemisches bzw. der Polymerlegierung in der Folie oder Folienschicht) Vinylchloridhomo-, -co-, -ter-und/oder -pfropfpolymerisat, 40 - 1 Gew.-% mindestens eines Plastifiziermittels auf der Basis eines plastifizierenden Hochpolymeren mit polaren Gruppen, das ein Molekulargewicht von größer als 10.000, vorzugsweise größer als 30.000, aufweist und mindestens einem weiteren Polymeren, sowie gegebenenfalls Zusatzmitteln und/oder Verarbeitungshilfsmitteln und/oder gegebenenfalls mit einer, an der Folie oder Unterfolie angeordneten Schaumschicht oder Hinterschäumung, wobei die Folie als Monofolie oder als mindestens eine Schicht einer Verbundfolie ausgebildet ist.

Aus der DE-OS 32 27 107 ist bereits eine alterungsbeständige Kunststoffolie bekannt, die ebenfalls aus Polyvinylchlorid, ein polare Gruppen enthaltendes Plastifiziermittel und einem weiteren Polymeren, nämlich Acrylnitril-Butadien-Styrol-Polymerisat (ABS) besteht. Bei starken Belastungen, insbesondere starken Lichteinwirkungen und hohen Temperaturen (über ca. 100 °C) können jedoch auch bei diesen alterungsbeständigen Kunststofffolien unerwünschte Farbänderungen und Dehnungsverminderungen bzw. Dehnungsabfälle auftreten.

In der EP-A-0 101 899 sind thermoplastische Formmassen, beschrieben, bestehend aus

a) 25-50 Gew.-Teilen eines Vinylchloridhomo- oder -copolymerisats mit mindestens 50 Gew.-% Vinylchlorid,

b) 25-50 Gew.-Teilen einer Mischung aus

b1) 20-100 Gew.-Teilen eines Propfproduktes, erhalten durch

b1.1) Polymerisation einer Monomermischung von 0-75 Gew.-Teilen (Meth)Acrylnitril mit 100-25 Gew.-Teilen Styrol und/oder p-Methylstyrol und/oder $\alpha$-Methylstyrol und/oder methylmethacrylat in Gegenwart von

b1.2) eines Kautschukpolymeren, wobei das Gew.-Verhältnis der Monomermischung zu dem Kautschukpolymeren 1 : 10 bis 10 : 1 betragen kann und das Kautschukpolymer darstellt,

b1.2.1) einem Copolymerisat aus

a) 60-100 Gew.-Teilen eines Acrylesters eines $C_1$-$C_{10}$ Alkohols,

b) 0-40 Gew. Teilen wenigstens eines Monomeren aus der Reihe Acrylnitril, Methylmethactylat, Vinylacetat und Vinylether und

c) bis zu 10 Gew.-Teilen eines vernetzend wirkenden bi- oder polyfunktionellen Monomeren oder Polymeren,

b1.2.2) einem Ethylen-Propylen-Terpolymerisat-Kautschuk und

b2) 0-80 Gew.-Teilen eines Copolymerisates, erhalten durch Polymerisation von 0-75 Gew.-Teilen (Meth)Acrylnitril und 100-25 Gew.-Teilen wenigstens eines Monomeren aus der Reihe Styrol, $\alpha$-Methylstyrol, p-Methylstyrol und Methylmethacrylat,

c) 0-10 Gew.-Teilen eines harzartigen, thermoplastischen Copolymerisates aus einem Styrol-Arcrylnitril- bzw. Methylmetacrylat-Acrylnitril-Copolymeren, das einen Staudinger Index [$\eta$], von $\geq 3$ $\frac{dl}{g}$, besitzt und dessen [$\eta$] Rest in jedem Fall über dem des im Grundpolymeren B) enthaltenen Copolymerisates liegt,

d) 5-40 Gew.-Teile eines Copolymerisates, das aufgebaut ist aus:

d1) einem Ethylen-Vinylacetat- bzw. einem Ethylen-Acrylester-Copolymerisat mit einem Gehalt an polarer Komponente $\geq$ 50 Gew.-% und mit mittleren Molekulargewichten $\geq$ 1500 und/oder

d2) einem Ethylen-Vinylacetat-Kohlenmonoxid-Terpolymeren mit einem Gehalt an polarer Komponente $\geq$ 20 Gew.-% und mit mittleren Molekulargewichten $\geq$ 1500 und/oder

d3) einem Copolymerisat aus

d3.1) 10-99,9 Gew.-Teilen eines Acrylesters eines C1-C15-Alkohols

d3.2) 0-90 Gew.-Teilen wenigstens eines bi- oder polyfunktionellen Monomeren mit konjugierten oder unkonjugierten Doppelbindungen im Molekül und gegebenenfalls

d3.3) bis zu 40 Gew.-%, bezogen auf die Summe von d1) und d2), weiterer Monomerer wie Acrylnitril, Vinylacetat und/oder Methacrylsäurealkylestern von $C_1$-$C_8$-Alkoholen, mit mittleren Molekulargewichten $\geq$ 1500, wobei das Copolymerisat unvernetzt oder teilvernetzt vorliegen soll und

e) 3-30 Gew.Teilen

e1) eines Copolymerisates, das hergestellt ist aus

e1.1) 60-95 Gew.-Teilen eines Monomeren mit zwei konjugierten, olefinischen Doppelverbindungen und oder eines Acrylesters eines $C_1$-$C_6$-Alkohols,

e1.2) 5-40 Gew.-Teilen Styrol und/oder Acrylnitril und/oder Methacrylsäuremethylester, gegebenenfalls

e1.3) bis zu 10 Gew.-Teilen eines vernetzend wirkenden bis- oder polyfunktionellen Monomeren oder Polymeren und konjugierten Doppelbindungen und

e1.4) bis zu 30 Gew.-Teilen weiterer Monomerer wie Vinylacetat, (Meth)Acrylsäure oder Vinylether, wobei die Komponente e1) wenigstens in einem Parameter von Komponente d3) verschieden sein soll und wobei das Copolymerisat e1) einen Gelgehalt von ≥ 70 % aufweisen soll und/oder

e2) eines Ethylen-Propylen-Terpolymerisat-Kautschuks mit Gelgehalten ≥ 70 %.

Die Komponenten B und E besitzen dabei somit zusätzlich ein Ethylen-Propylen-Terpolymerisat-Kautschuk und/oder weisen einen Gelgehalt von > als 70 % auf, was bedeutet, daß sie im größeren Umfang vernetzt sind. Eine aus der Formmasse hergestellte thermoverformte Folie, insbesondere eine im Negativ- oder Positivtiefziehverfahren verformte Folie, zeigt in ihrer Narbgebung, Feinstrukturierung und bei den entsprechenden Hinterschneidungen ein erhöhtes Rückstellvermögen und verbesserungsbedürftige Dehnungswerte und/oder Zugfestigkeitswerte.

Ziel und Aufgabe der vorliegenden Erfindung war es, die Eigenschaften der Kunststoffolie zu verbessern. Insbesondere sollte eine Verbesserung der Farbbeständigkeit bei stärkeren Lichteinwirkungen und ein verminderter Dehnungsabfall erzielt werden.

Erfindungsgemäß wurde festgestellt, daß diesen Zielen und Aufgaben eine butadienfreie Folie, tiefziehfähige Folie für Kraftfahrzeuginnenräume, mit einer Foliendicke von 250 $\mu$m - 1.800 $\mu$m, vorzugsweise 500 $\mu$m - 1.200 $\mu$m, gerecht wird, bestehend aus Kunststoffmischungen oder -legierungen von 28 - 55 Gew.-% (bezogen auf 100 Gew.-% des Polymergemisches bzw. der Polymerlegierung in der Folie oder Folienschicht) Vinylchloridhomo-, -co-, -ter- und/oder -pfropfpolymerisat, 37 - 6 Gew.-% mindestens eines Plastifiziermittels auf der Basis eines plastifizierenden Hochpolymeren mit polaren Gruppen, das ein Molekulargewicht von größer als 10.000, vorzugsweise größer als 30.000, aufweist und mindestens einem weiteren butadienfreien Polymeren, vorzugsweise Acrylnitril-Butadien-Styrol-Copolymerisatfreien (ABS-freien) Polymeren sowie gegebenenfalls Zusatzmitteln und/oder Verarbeitungshilfsmitteln und/oder gegebenenfalls mit einer, an der Folie oder Unterfolie angeordneten Schaumschicht oder Hinterschäumung, wobei die Folie als Monofolie oder als mindestens eine Schicht einer Verbundfolie ausgebildet ist. Gemäß der Erfindung enthält die Folie oder Folienschicht neben dem Plastifiziermittel als butadienfreies Polymerisat 21 - 37 Gew.-% PMMA - A Polymethylmethacrylat-Acrylsäureester-Pfropfpolymerisat (Polymethylmethacrylathomo- und/oder -copolymerisat, gepfropft mit Acrylsäureester) und 14 - 2 Gew.-% mindestens eines Acryl- und/oder Methacrylsäureester-Copolymerisates mit einem Molekulargewicht von größer als 50.000, das vorzugsweise durch Copolymerisation der Säureester untereinander und/oder mit Acrylnitril hergestellt ist.

Es war überraschend, daß durch Polymethylmethacrylat als Matrix für die Acrylsäureester Pfropfkomponente die nachteilige Veränderung der Struktur der Blends durch Wärme und Lichtenergie, im Vergleich zu Styrol-Acrylnitril-Pfropfpolymere, erheblich vermindert wird. Diese Schutzwirkung kann noch verbessert werden, wenn zusätzlich Methacrylsäureester-Copolymerisate zugesetzt werden.

Mit Hilfe der erfindungsgemäßen Folienzusammensetzung gelingt es die Alterungsbeständigkeit, insbesondere auch bei Heißbelichtung, sowie eine Verminderung des Dehnungsabfalles zu erzielen.

Bei dem in der Folie oder Folienschicht enthaltenen PMMA - A Polymethylmethacrylat-Acrylsäureester-Pfropfpolymerisat (Polymethylmethacrylathomo- und/oder -copolymerisat, gepfropft mit Acrylsäureester) beträgt der Anteil des aufgepfropften Acrylates 40 - 90 Gew.-%, vorzugsweise 50 - 85 Gew.-%, (berechnet auf 100 Gew.-% PMMA - A (Polymethylmethacrylathomo- oder -copolymerisat gepfropft mit Acrylsäureester).

Der aufgepfropfte Acrylsäureester des PMMA - A weist Estergruppen mit $C_2$ - $C_6$ auf und ist vorzugsweise ein Butylacrylat.

Nach einer weiteren bevorzugten Ausführungsform ist der aufgepfropfte Acrylsäureester des PMMA - A mit $C_2$ - $C_6$ Estergruppen, vorzugsweise Butylacrylat, teilvernetzt und kautschukartig.

In der erfindungsgemäßen Folienzusammensetzung gelingt es, auch den Zähigkeitsabfall nach Wärmelagerung zu verringern und die Alterungsstabilität zu verbessern.

Das Acryl- und/oder Methacrylsäureester-Copolymerisat, das vorzugsweise durch Copolymerisation der Säureester untereinander und/oder mit Acrylnitril hergestellt ist, wird nach einer bevorzugten Ausführungsform bis zu 70 Gew.%, vorzugsweise bis zu 50 Gew.%, (bezogen auf 100 Gew.-Teile eingesetztes Acryl- und/oder Methacrylsäureester-Copolymerisat) durch Styrol-Acrylnitril-Copolymerisat (SAN) ersetzt.

Das in der Folien enthaltene PMMA - A Polymethylmethacrylat-Acrylsäureester-Pfropfpolymerisat (Polymethylmethacrylathomo- und/oder -copolymerisat, gepfropft mit Acrylsäureester), wird nach einer bevorzugten Ausführungsform bis zu 75 Gew.-%, vorzugsweise bis zu 60 Gew.-%, (berechnet auf 100 Gew.-% PMMA - A) durch Acrylnitril-Styrol-Acrylsäureester-Pfropfpolymerisat (ASA) oder -Terpolymerisat ersetzt. Dadurch gelingt es, bestimmte Eigenschaften der Folie (u. a. die Wärmeformbarkeit) noch weiter zu verbessern.

Die Folie oder Folienschicht(en) enthält bzw. enthalten, bezogen auf 100 Gew.-Teile der Polymermischung oder Polymerlegierung, 2 - 20 Gew.-Teile, vorzugsweise 3 - 15 Gew.-Teile, eines oder mehrerer Verarbeitungshilfsmittel, vorzugsweise Gleitmittel, Stabilisatoren, Fließfähigkeitsverbesserungsmittel und/oder Antioxidantien, sowie 0 bis 50 Gew.-Teile, vorzugsweise 0,5 bis 30 Gew.-Teile, eines Zusatzmittels oder Zusatzmittelgemisches, vorzugsweise mindestens eines Füllstoffes, mindestens eines Mittels zum Schwerentflammbarmachen, mindestens eines Farbstoffes oder Farbpigmentes.

Das polare Gruppen aufweisende Plastifiziermittel oder Plastifiziermittelgemisch der Folie, der Unter- und/oder Oberfolie, das ein Molekulargewicht größer als 50.000 aufweist, besteht aus mindestens einem Alken- oder Alkenyl-Vinylacetat-Kohlenmonoxid-Terpolymerisat und/oder Alken- oder Alkenyl-Vinylacetat-Copolymerisat und/oder Alken oder Alkenyl ($C_1$ - $C_4$) - Alkyl($C_1$ - $C_8$)-Acrylat-Kohlenmonoxid-Terpolymerisat, Alken oder Alkenyl ($C_1$ - $C_4$) - Alkyl($C_1$ - $C_8$)-Methacrylat-Kohlenmonoxid-Terpolymerisat, Alken oder Alkenyl ($C_1$ - $C_4$) - Alkyl($C_1$ - $C_8$)-Acrylat-Copolymerisat, Alken oder Alkenyl ($C_1$ - $C_4$) - Alkyl($C_1$ -$C_8$)-Methacrylat-Copolymerisat mit statistisch verteilten Vinylacetat-, Acrylat- oder Methacrylatgruppen bzw. Alkylacrylat- oder Alkylmethacrylatgruppen sowie gegebenenfalls (im Fall von Terpolymerisaten) statistisch verteilten Kohlenmonoxidgruppen, vorzugsweise Ethylen-Butylacrylat-Kohlenmonoxid-Terpolymerisat, Ethylen-Hexylacrylat-Kohlenmonoxid-Terpolymerisat, Ethylen-Butylacrylat-Copolymerisat, Ethylen-Hexylacrylat-Copolymerisat, Ethylen-Vinylacetat-Kohlenmonoxid-Terpolymerisat und/oder Ethylen-Vinylacetat-Copolymerisat oder enthält eines oder mehrerer dieser Verbindungen.

Das polare Gruppen enthaltende Plastifiziermittel oder Plastifiziermittelgemisch wird nach einer Ausführungsform bis zu 100 Gew.-%, vorzugsweise bis zu 60 Gew.-%, (bezogen auf 100 Gew.-% des Plastifiziermittels oder Plastifiziermittelgemisches in der Folie oder Folienschicht) durch ein chloriertes Polyethylen und/oder Polycaprolacton (PCL) ersetzt.

Die butadienfreie Folie besteht nach einer Ausführungsform aus mindestens einer Unterfolie oder Unterschicht und mindestens einer Oberfolie oder Oberschicht, wobei die qualitative und/oder quantitative Zusammensetzung zwischen Unterfolie(n) oder Unterschicht(en) und Oberfolie(n) oder Oberschicht(en) unterschiedlich sind. Bevorzugt ist dabei der Prozentgehalt an Vinylchloridhomo-, -co-, -ter- und/oder -pfropfpolymerisat in der bzw. den Unterfolie(n) oder Unterschicht(en) kleiner als der in der bzw. den Oberfolie(n) oder Oberschicht(en) und/oder der prozentuale Gehalt des polare Gruppen enthaltende Plastifiziermittels oder Plastifiziermittelgemisches ist in der bzw. den Unterfolie(n) oder Unterschicht(en) größer als der in der bzw. den Oberfolie(n) oder Oberschicht(en).

Nach einer weiteren bevorzugten Ausführungsform enthält die aus mindestens einer Unterfolie oder Unterschicht und mindestens einer Oberfolie oder Oberschicht bestehende Verbundfolie mindestens eine Unterfolie oder Unterschicht, die (bezogen auf 100 Gew.-% Polymere) aus 28 - 55 Gew.-%, Vinylchloridhomo-, -co-, -ter- und/oder -pfropfpolymerisat und/oder Legierungen auf der Basis von Polyvinylchlorid, 21 - 37 Gew.-% PMMA - A Polymethylmethacrylat-Acrylsäureester-Pfropfpolymerisat (Polymethylmethacrylathomo- und/oder -copolymerisat, gepfropft mit Acrylsäureester), wobei der Anteil des aufgepfropften Acrylates 40 - 90 Gew.-%, vorzugsweise 50 - 85 Gew.-%, (berechnet auf 100 Gew.-% PMMA - A (Polymethylmethacrylathomo- oder -copolymerisat gepfropft, mit Acrylsäureester) beträgt, 37 - 6 Gew.-% polare Gruppen aufweisendes Plastifiziermittel oder Plastifiziermittelgemisch aus mindestens einem Alken- oder Alkenyl-Vinylacetat-Kohlenmonoxid-Terpolymerisat und/oder Alken- oder Alkenyl-Vinylacetat-Copolymerisat und/oder Alken- oder Alkenyl ($C_1$ - $C_4$) - Alkyl($C_1$ - $C_8$)-Acrylat-Kohlenmonoxid-Terpolymerisat, Alken oder Alkenyl ($C_1$ - $C_4$) - Alkyl($C_1$ -$C_8$)-Methacrylat-Kohlenmonoxid-Terpolymerisat, Alken oder Alkenyl ($C_1$ - $C_4$) - Alkyl($C_1$ -$C_8$)-Acrylat-Copolymerisat, Alken oder Alkenyl ($C_1$ - $C_4$) - Alkyl($C_1$ -$C_8$)-Methacrylat-Copolymerisat besteht oder dieses enthält, mit statistisch verteilten Vinylacetat-, Acrylat- oder Methacrylatgruppen bzw. Alkylacrylat- oder Alkylmethacrylatgruppen sowie gegebenenfalls (im Fall von Terpolymerisaten) statistisch verteilten Kohlenmonoxidgruppen, vorzugsweise Ethylen-Butylacrylat-Kohlenmonoxid-Terpolymerisat, Ethylen-Hexylacrylat-Kohlenmonoxid-Terpolymerisat, Ethylen-Butylacrylat-Copolymerisat, Ethylen-Hexylacrylat-Copolymerisat, Ethylen-Vinylacetat-Kohlenmonoxid-Terpolymerisat und/oder Ethylen-Vinylacetat-Copolymerisat und/oder ein chloriertes Polyethylen und/oder ein Polycaprolacton, 14 - 2 Gew.-% mindestens eines Acryl- und/oder Methacrylsäureester-Copolymerisates mit einem Molekulargewicht von größer als 50.000 enthält, das vorzugsweise durch Copolymerisation der Säureester untereinander und/oder mit Acrylnitril hergestellt ist, besteht oder diese enthält.

Das in der Folie oder Folienschicht enthaltenen PMMA - A ist nach einer bevorzugten Ausführungsform durch die gleiche Gewichtsmenge Polymethylmethacrylat-Methacrylsäureester-Pfropfpolymerisat (Polymethylmethacrylathomo- und/oder -copolymerisat, gepfropft mit Methacrylsäureester) ganz oder teil-

4

weise ersetzt.

Nach einer Ausführungsform der Erfindung ist die Oberfolie oder Oberflächenschicht mit einer Lackschicht oder Kunststoffbeschichtung, vorzugsweise auf der Basis von Acrylatharzen, Polvinylchlorid-Acrylatharzen, Polyurethanharzen und/oder Epoxidharzen, auf ihrer freien Oberflächenschicht überzogen.

Die Erfindung betrifft weiterhin ein Verfahren zur Herstellung der butadienfreien Folie, wobei die Kunststoffmischung der Monofolie, Ober- und/oder Unterfolie in einem Extruder oder anderen an sich bekannten Plastifiziervorrichtungen, vorzugsweise Einschnecken- oder Doppelschneckenextruder, Planetenwalzenextruder oder Plastifizierwerken, gegebenenfalls zusammen mit den Verarbeitungshilfsmitteln und/oder Zusatzmitteln erhitzt und plastifiziert wird, und die Kunststoffmasse je nach Härteeinstellung zwischen 150 °C und 210 °C, vorzugsweise 160 °C bis 200 °C (Massentemperatur), zu Folien verarbeitet wird. Die 150 - 210 °C, vorzugsweise 160 - 200 °C, heiße kunststoffhaltige Masse wird dabei über einen Mehrwalzenkalander, vorzugsweise Drei- oder Vierwalzenkalander, zu einer Folienbahn verformt, wobei die Temperatureinstellung der ersten, zweiten und dritten Walze, vorzugsweise zwischen 170 und 200 °C, die der vierten Walze zwischen 160 und 180 °C liegt.

Nach einer anderen Ausführungsform des Verfahrens werden die Einzelbahnen auf einem sog. Prägekalander hitzekaschiert und/oder bei mehrschichtigen Folien oder Verbundfolien die Oberfolie oder Oberschicht mit einer Oberflächenschicht oder Lackschicht im vorab versehen und nachfolgend auf die Unterfolie oder den Verbund oder auf den fertigen Verbund nach dem sog. Prägen aufgebracht.

Nach einer bevorzugten Ausführungsform wird die heiße Masse über einen 3-Walzen-, vorzugsweise 4-Walzenkalander zu einer Folienbahn verformt. Typische Temperatureinstellung ist vorzugsweise Walze 1, 2 (190 °C), Walze 3 (196 °C) und Walze 4 (170 °C).

Die Folienoberfläche kann dabei glatt sein oder eine mikrorauhe Struktur erhalten.

Um die jeweiligen Enddicken des Verbundes zu erreichen und die gewünschte Oberflächenstruktur einzubringen, werden die Einzelbahnen auf einem sogenannten Prägekalander hitzekaschiert.

Die oberste Bahn (Oberfolie) wird in der Regel vorab mit einer Lackschicht ausgerüstet. Mit einer geeigneten Anlage kann diese auch auf den fertigen Verbund nach dem sog. Prägen aufgebracht werden.

Die Verarbeitung der Folie bzw. der dafür verwendeten Kunststoffmasse erfolgt bevorzugt am Extruder mit Breitschlitzdüsen und unmittelbar sich anschließender Einbringung der Oberflächenstruktur (Prägung).

Die Verarbeitung zur Folie kann sowohl vom Dryblend (Pulvermischung) aus direkt oder auch über die Zwischenstufe - Granulat - erfolgen. Das Granulat sollte dann in bekannter Weise vorher hergestellt werden.

Als Extruder eignen sich sowohl Einschnecken- als auch Zweischneckenextruder. Die Kunststoffmasse erreicht beim Austritt aus der Breitschlitzdüse Temperaturen bis 230 °C (vorzugsweise 190 - 200 °C). Die heiße Masse kann nun direkt in einen Walzenspalt geführt werden, wobei eine der Walzen eine Oberflächenstruktur (= Prägung) haben kann. Die Walzen sind beide aus Metall oder eine oder beide aus Nichtmetall, z. B. Prägewalze aus Kunststoff (Silikon), Gegenwalze = Gummiwalze.

Die heiße Masse wird nach einer bevorzugten Ausführungsform über eine sog. Kalandrette gefahren werden. Hier ist der Prägestation ein großes Walzenpaar vorgeschaltet, in der die Schmelze mit einem Knet läuft; der Durchlauf dieses Walzenpaares stellt die Dickenkonstanz über die Breite sicher.

Die Folie wird abgekühlt und vor dem Aufrollen nach einer Ausführungsform noch zur Verbesserung der Haftung zum PUR-Schaum noch mit einer Corona-Entladung auf der Folienrückseite behandelt werden. Ferner kann zur Verbesserung des Thermoformes noch eine Rückseitenprägung aufgebracht werden.

Die geprägte Folie kann sowohl auf der Oberfläche als auch auf der Rückseite noch mit Lacken ausgerüstet werden.

Beispiele

| | Gew.-Teile | Gew.-% |
|---|---|---|
| 1. Polyvinylchlorid (PVC) | 50,0 | 41,43 |
| Polymethylmethacrylat-Butylacrylat-Pfropfpoly-merisat (PMMA - BA) | 37,2 | 30,82 |
| Ethylen-Vinylacetat-Copolymerisat (EVA) | 33,5 | 27,75 |
| | 120,7 | 100,00 |
| + Additive | | |
| 2. Polyvinylchlorid (PVC) | 50,0 | 39,28 |
| Polymethylmethacrylat-Butylacrylat-Pfropfpoly-merisat (PMMA - BA) | 33,3 | 26,16 |
| Styrol-Acrylnitril-Copoly-merisat (SAN) | 8,0 | 6,28 |
| Polymethylmethacrylat (PMMA) | 6,0 | 4,71 |
| Ethylen-Vinylacetat-Copolymerisat (EVA) | 30,0 | 23,57 |
| | 127,3 | 100,00 |
| + Additive | | |
| 3. Polyvinylchlorid (PVC) | 50,0 | 40,55 |
| Polymethylmethacrylat-Butylacrylat-Pfropfpoly-merisat (PMMA - BA) | 17,7 | 13,54 |
| Acrylnitril-Styrol-Acryl-säureester-Pfropfpoly-merisat (ASA) | 16,6 | 13,46 |
| Styrol-Acrylnitril-Copoly-merisat (SAN) | 5,0 | 4,06 |
| Polymethylmethacrylat (PMMA) | 5,0 | 4,06 |
| Ethylen-Vinylacetat- | | |

6

| Copolymerisat (EVA) | 30,0 | 24,33 |
|---|---|---|
|  | 123,3 | 100,00 |

+ Additive

| 4. Polyvinylchlorid (PVC) | 50,0 | 39,49 |
|---|---|---|
| Polymethylmethacrylat-Butylacrylat-Pfropfpolymerisat (PMMA - BA) | 33,3 | 26,30 |
| Polymethylmethacrylat (PMMA) | 13,3 | 10,51 |
| Ethylen-Vinylacetat-Copolymerisat (EVA) | 33,5 | 27,75 |
|  | 120,7 | 100,00 |

+ Additive

Als Additive wurden bei Beispielen 1 - 4 folgende Anteile verwendet:

| Stabilisatoren | 2 | Gew.-Teile |
|---|---|---|
| Antioxidantien und/oder Gleitmittel | 3 | Gew.-Teile |
| Farbstoffe | 1,5 | Gew.-Teile |

| 5. Polyvinylchlorid (PVC) | 50,0 | 41,43 |
|---|---|---|
| Polymethylmethacrylat-Butylacrylat-Pfropfpolymerisat (PMMA - BA) | 37,2 | 30,82 |
| Ethylen-Vinylacetat-Kohlenmonoxid-Terpolymerisat | 33,5 | 27,75 |
| 1 | 20,7 | 100,00 |

| 6. Polyvinylchlorid (PVC) | 50,0 | 41,43 |
|---|---|---|
| Polymethylmethacrylat- | | |

7

| | | |
|---|---|---|
| Butylacrylat-Pfropfpolymerisat (PMMA - BA) | 37,2 | 30,82 |
| Ethylen-Butylacrylat-Kohlenmonoxid-Terpolymerisat im Gemisch 1 : 1 mit Ethylen-Vinylacetat-Copolymerisat | 33,5 | 27,75 |
| | ———— | ———— |
| | 120,7 | 100,00 |

+ Additive

Als Additive wurden bei Beispielen 5 und 6 folgende Anteile verwendet:

| | | |
|---|---|---|
| Stabilisatoren | 1 | Gew.-Teil |
| Antioxidantien und/oder Gleitmittel | 2,5 | Gew-Teile |
| Aluminiumverbindung oder Magnesium- und/oder Aluminium-Hydroxide und/oder Silikate | 1,7 | Gew.-Teile |

Zeichnungsbeschreibung

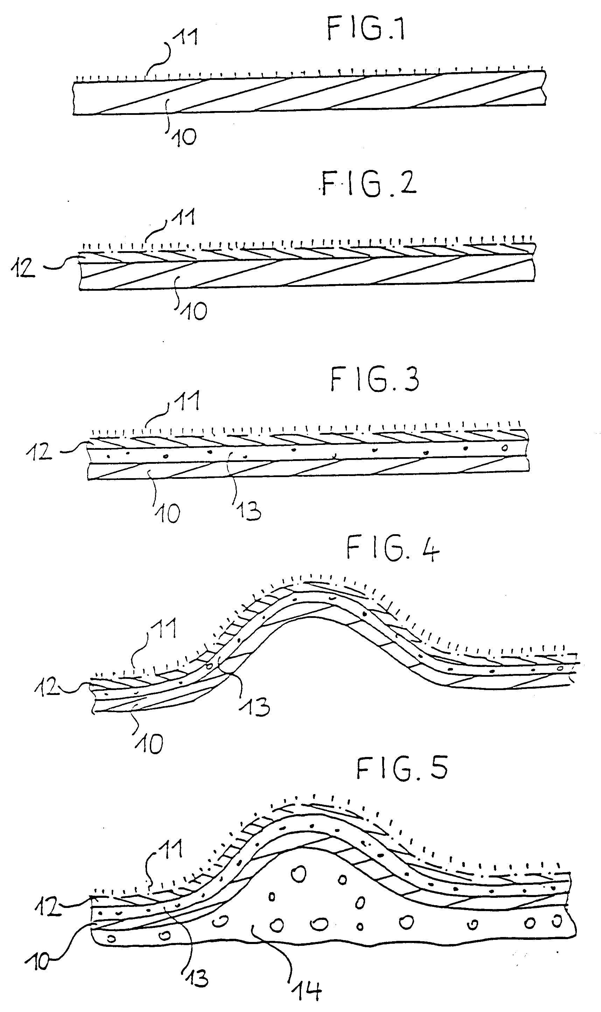

Die beigefügten Figuren 1 - 5 zeigen schematisch die erfindungsgemäßen Folien.

In Fig. 1 ist eine Folie (10) mit Lack (11) (beispielsweise aus PVC-Acrylat-Lack) auf der Sichtseite schematisch dargestellt.

In Fig. 2 ist die Unterfolie (10) mit der Oberfolie (12) zu sehen, auf deren Sichtseite eine Lackschicht (11) angebracht ist.

In Fig. 3 ist eine Mehrschichtfolie schematisch dargestellt. Die Unterfolien (10) und (13) können aus dem gleichen oder unterschiedlichen Material bestehen. Die Oberfolie (12) wird mit einer Beschichtung bzw. einem Lack versehen.

In Fig. 4 ist die in Fig. 3 dargestellte Mehrschichtfolie thermoplastisch verformt.

In Fig. 5 ist ein Formkörper dargestellt, bestehend aus der thermoplastisch verformten Mehrschichtfolie, die z. B. mit Polyurethanharzschaum (14) hinterschäumt ist.

**Patentansprüche**

1. Butadienfreie, tiefziehfähige Folie für Kraftfahrzeuginnenräume, mit einer Foliendicke von 250 μm - 1.800 μm, vorzugsweise 500 μm - 1.200 μm, bestehend aus Kunststoffmischungen oder -legierungen von 28 - 55 Gew.-% (bezogen auf 100 Gew.-% des Polymergemisches bzw. der Polymerlegierung in der Folie oder Folienschicht) Vinylchloridhomo-, -co-, -ter- und/oder -pfropfpolymerisat, 37 - 6 Gew.-% mindestens eines Plastifiziermittels auf der Basis eines plastifizierenden Hochpolymeren mit polaren Gruppen, das ein Molekulargewicht von
größer als 10.000, vorzugsweise
größer als 30.000,
aufweist und mindestens einem weiteren butadienfreien Polymeren, vorzugsweise Acrylnitril-Butadien-Styrol-Copolymerisat-freien (ABS-freien) Polymeren sowie gegebenenfalls Zusatzmitteln und/oder Verarbeitungshilfsmitteln und/oder gegebenenfalls mit einer, an der Folie oder Unterfolie angeordneten Schaumschicht oder Hinterschäumung, wobei die Folie als Monofolie oder als mindestens eine Schicht einer Verbundfolie ausgebildet ist und die Folie oder Folienschicht neben dem Plastifiziermittel als butadienfreies Polymerisat
21 - 37 Gew.-% PMMA - A
Polymethylmethacrylat-Acrylsäureester-Pfropfpolymerisat (Polymethylmethacrylathomo-und/oder -copolymerisat, gepfropft mit Acrylsäureester) und
14 - 2 Gew.-%
mindestens eines Acryl- und/oder Methacrylsäureester-Copolymerisates mit einem Molekulargewicht von größer als 50.000 enthält, das vorzugsweise durch Copolymerisation der Säureester untereinander und/oder mit Acrylnitril hergestellt ist.

2.  Butadienfreie Folie nach Anspruch 1, dadurch gekennzeichnet, daß das Acryl- und/oder -Methacrylsäureester-Copolymerisat ein Molekulargewicht von größer als 70.000 aufweist.

3.  Butadienfreie Folie nach Ansprüchen 1 und 2, dadurch gekennzeichnet, daß bei dem in der Folie oder Folienschicht enthaltenen PMMA - A Polymethylmethacrylat-Acrylsäureester-Pfropfpolymerisat (Polymethylmethacrylathomo- und/oder -copolymerisat gepfropft mit Acrylsäureester) der Anteil des aufgepfropften Acrylates
40 - 90 Gew.-%, vorzugsweise
50 - 85 Gew.-%,
(berechnet auf 100 Gew.-% PMMA - A (Polymethylmethacrylathomo- oder -copolymerisat, gepfropft mit Acrylsäureester) beträgt.

4.  Butadienfreie Folie nach einem oder mehreren der Ansprüche 1 bis 3, dadurch gekennzeichnet, daß der aufgepfropfte Acrylsäureester des PMMA - A Estergruppen mit $C_2$ - $C_6$ aufweist, vorzugsweise ein Butylacrylat ist.

5.  Butadienfreie Folie nach einem oder mehreren der Ansprüche 1 bis 4, dadurch gekennzeichnet, daß der aufgepfropfte Acrylsäureester des PMMA - A mit $C_2$ - $C_6$ Estergruppen, vorzugsweise Butylacrylat, teilvernetzt und kautschukartig ist.

6.  Butadienfreie Folie nach einem oder mehreren der Ansprüche 1 bis 5, dadurch gekennzeichnet, daß das Acryl- und/oder Methacrylsäureester-Copolymerisat, das vorzugsweise durch Copolymerisation der Säureester untereinander und/oder mit Acrylnitril hergestellt ist,
bis zu 70 Gew.%, vorzugsweise
bis zu 50 Gew.-%,
(bezogen auf 100 Gew.-Teile eingesetztes Acryl- und/oder Methacrylsäureester-Copolymerisat) durch Styrol-Acrylnitril-Copolymerisat (SAN) ersetzt ist.

7.  Butadienfreie Folie nach einem oder mehreren der Ansprüche 1 bis 6, dadurch gekennzeichnet, daß das in der Folie enthaltene PMMA - A Polymethylmethacrylat-Acrylsäureester-Pfropfpopolymerisat (Polymethylmethacrylathomo-und/oder -copolymerisat, gepfropft mit Acrylsäureester)
bis zu 75 Gew.-%, vorzugsweise
bis zu 60 Gew.-%,
(berechnet auf 100 Gew.-% PMMA - A) durch Acrylnitril-Styrol-Acrylsäureester-Pfropfpolymerisat (ASA) oder -Terpolymerisat ersetzt sind.

8.  Butadienfreie Folie nach einem oder mehreren der Ansprüche 1 bis 7, dadurch gekennzeichnet, daß die Folie oder Folienschicht(en), bezogen auf 100 Gew.-Teile der Polymermischung oder Polymerlegierung,
2 - 20 Gew.-Teile, vorzugsweise
3 - 15 Gew.-Teile,
eines oder mehrerer Verarbeitungshilfsmittel, vorzugsweise Gleitmittel, Stabilisatoren, Fließfähigkeitsverbesserungsmittel und/oder Antioxidantien, sowie

0 bis 50 Gew.-Teile, vorzugsweise

0,5 bis 30 Gew.-Teile,

eines Zusatzmittels oder Zusatzmittelgemisches, vorzugsweise mindestens eines Füllstoffes, mindestens eines Mittels zum Schwerentflammbarmachen, mindestens eines Farbstoffes oder Farbpigmentes, enthält.

9. Butadienfreie Folie nach einem oder mehreren der Ansprüche 1 bis 8, dadurch gekennzeichnet, daß das polare Gruppen aufweisende Plastifiziermittel oder Plastifiziermittelgemisch der Folie, der Unter- und/oder Oberfolie ein Molekulargewicht größer als 50.000 aufweist und aus mindestens einem Alken- oder Alkenyl-Vinylacetat-Kohlenmonoxid-Terpolymerisat und/oder Alken- oder Alkenyl-Vinylacetat-Copolymerisat und/oder Alken oder Alkenyl ($C_1$ - $C_4$) - Alkyl($C_1$ - $C_8$)-Acrylat-Kohlenmonoxid-Terpolymerisat, Alken oder Alkenyl ($C_1$ - $C_4$) - Alkyl($C_1$ - $C_8$)-Methacrylat-Kohlenmonoxid-Terpolymerisat, Alken oder Alkenyl ($C_1$ - $C_4$) - Alkyl($C_1$ - $C_8$)-Acrylat-Copolymerisat, Alken oder Alkenyl ($C_1$ - $C_4$) - Alkyl($C_1$ - $C_8$)-Methacrylat-Copolymerisat besteht oder dieses enthält, mit statistisch verteilten Vinylacetat-, Acrylat- oder Methacrylatgruppen bzw. Alkylacrylat- oder Alkylmethacrylatgruppen sowie gegebenenfalls (im Fall von Terpolymerisaten) statistisch verteilten Kohlenmonoxidgruppen, vorzugsweise Ethylen-Butylacrylat-Kohlenmonoxid-Terpolymerisat, Ethylen-Hexylacrylat-Kohlenmonoxid-Terpolymerisat,Ethylen-Butylacrylat-Copolymerisat, Ethylen-Hexylacrylat-Copolymerisat, Ethylen-Vinylacetat-Kohlenmonoxid-Terpolymerisat und/oder Ethylen-Vinylacetat-Copolymerisat.

10. Butadienfreie Folie nach einem oder mehreren der Ansprüche 1 bis 9, dadurch gekennzeichnet, daß das polare Gruppen enthaltende Plastifiziermittel oder Plastifiziermittelgemisch

bis zu 100 Gew.-%, vorzugsweise

bis zu 60 Gew.-%,

(bezogen auf 100 Gew.-% des Plastifiziermittels oder Plastifiziermittelgemisches in der Folie oder Folienschicht) durch ein chloriertes Polyethylen und/oder Polycaprolacton (PCL) ersetzt ist.

11. Butadienfreie Folie nach einem oder mehreren der Ansprüche 1 bis 10, dadurch gekennzeichnet, daß die Folie aus mindestens einer Unterfolie oder Unterschicht und mindestens einer Oberfolie oder Oberschicht besteht, wobei die qualitative und/oder quantitative Zusammensetzung zwischen Unterfolie(n) oder Unterschicht(en) und Oberfolie(n) oder Oberschicht(en) unterschiedlich sind.

12. Butadienfreie Folie nach einem oder mehreren der Ansprüche 1 bis 11, dadurch gekennzeichnet, daß der Prozentgehalt an Vinylchloridhomo-, -co-, -ter- und/oder -pfropfpolymerisat in der bzw. den Unterfolie(n) oder Unterschicht(en) kleiner ist als der in der bzw. den Oberfolie(n) oder Oberschicht(en) und/oder daß der prozentuale Gehalt des polare Gruppen enthaltende Plastifiziermittels oder Plastifiziermittelgemisches in der bzw. den Unterfolie(n) oder Unterschicht(en) größer ist als der in der bzw. den Oberfolie(n) oder Oberschicht(en).

13. Butadienfreie Folie nach einem oder mehreren der Ansprüche 1 bis 12, dadurch gekennzeichnet, daß die aus mindestens einer Unterfolie oder Unterschicht und mindestens einer Oberfolie oder Oberschicht bestehende Verbundfolie mindestens eine Unterfolie oder Unterschicht enthält, die (bezogen auf 100 Gew.-% Polymere) aus 28 - 55 Gew.-% Vinylchloridhomo-, -co-, -ter- und/oder -pfropfpolymerisat und/oder Legierungen auf der Basis von Polyvinylchlorid,

21 - 37 Gew.-% PMMA - A

Polymethylmethacrylat-Acrylsäureester-Pfropfpolymerisat (Polymethylmethacrylathomo- und/oder -copolymerisat gepfropft mit Acrylsäureester), wobei der Anteil des aufgepfropften Acrylates

40 - 90 Gew.-%, vorzugsweise

50 - 85 Gew.-%,

(berechnet auf 100 Gew.-% PMMA - A (Polymethylmethacrylathomo- oder -copolymerisat, gepfropft mit Acrylsäureester) beträgt,

37 - 6 Gew.-%

polare Gruppen aufweisendes Plastifiziermittel oder Plastifiziermittelgemisch aus mindestens einem Alken- oder Alkenyl-Vinylacetat-Kohlenmonoxid-Terpolymerisat und/oder Alken- oder Alkenyl-Vinylacetat-Copolymerisat und/oder Alken oder Alkenyl ($C_1$ - $C_4$) - Alkyl($C_1$ - $C_8$)-Acrylat-Kohlenmonoxid-Terpolymerisat, Alken oder Alkenyl ($C_1$ - $C_4$) - Alkyl($C_1$ - $C_8$)-Methacrylat-Kohlenmonoxid-Terpolymerisat, Alken oder Alkenyl ($C_1$ - $C_4$) - Alkyl($C_1$ - $C_8$)-Acrylat-Copolymerisat,

EP 0 298 208 B1

Alken oder Alkenyl ($C_1$ - $C_4$) - Alkyl($C_1$ - $C_8$)-Methacrylat-Copolymerisat besteht oder dieses enthält, mit statistisch verteilten Vinylacetat-, Acrylat- oder Methacrylatgruppen bzw. Alkylacrylat- oder Alkylmethacrylatgruppen sowie gegebenenfalls (im Fall von Terpolymerisaten) statistisch verteilten Kohlenmonoxidgruppen, vorzugsweise Ethylen-Butylacrylat-Kohlenmonoxid-Terpolymerisat, Ethylen-Hexylacrylat-Kohlenmonoxid-Terpolymerisat,Ethylen-Butylacrylat-Copolymerisat, Ethylen-Hexylacrylat-Copolymerisat, Ethylen-Vinylacetat-Kohlenmonoxid-Terpolymerisat und/oder Ethylen-Vinylacetat-Copolymerisat und/oder ein chloriertes Polyethylen und/oder ein Polycaprolacton,

14 - 2 Gew.-%

eines anderen Polymeren oder Polymergemisches, vorzugsweise mindestens eines Acryl- und/oder Methacrylsäureester-Copolymerisates mit einem Molekulargewicht von größer als 50.000 enthält, das vorzugsweise durch Copolymerisation der Säureester untereinander und/oder mit Acrylnitril hergestellt ist, besteht oder diese enthält.

14. Butadienfreie Folie nach einem oder mehreren der Ansprüche 1 bis 13, dadurch gekennzeichnet, daß das in der Folie oder Folienschicht enthaltenen PMMA - A durch die gleiche Gewichtsmenge Polymethylmethacrylat-Methacrylsäureester-Pfropfpolymerisat (Polymethylmethacrylathomo- und/oder -copolymerisat, gepfropft mit Methacrylsäureester) ganz oder teilweise ersetzt ist.

15. Butadienfreie Folie nach einem oder mehreren der Ansprüche 1 bis 14, dadurch gekennzeichnet, daß die Oberfolie oder Oberflächenschicht mit einer Lackschicht oder Kunststoffbeschichtung, vorzugsweise auf der Basis von Acrylatharzen, Polvinylchlorid-Acrylatharzen, Polyurethanharzen und/oder Epoxidharzen auf ihrer freien Oberflächenschicht überzogen ist.

16. Verfahren zur Herstellung der butadienfreien Folie nach einem oder mehreren der Ansprüche 1 - 15, dadurch gekennzeichnet, daß die Kunststoffmischung der Monofolie, Ober- und/oder Unterfolie in einem Extruder oder anderen an sich bekannten Plastifiziervorrichtungen, vorzugsweise Einschnecken- oder Doppelschnekkenextruder, Planetenwalzenextruder oder Plastifizierwerken, die gegebenenfalls zusammen mit den Verarbeitungshilfsmitteln und/oder Zusatzmitteln erhitzt und plastifiziert werden, wobei die Kunststoffmasse je nach Härteeinstellung zwischen

150 °C und 210 °C, vorzugsweise

160 °C bis 200 °C

(Massentemperatur), zu Folien verarbeitet wird.

17. Verfahren nach Anspruch 16, dadurch gekennzeichnet, daß die

150 - 210 °C, vorzugsweise

160 - 200 °C,

heiße kunststoffhaltige Masse über einen Mehrwalzenkalander, vorzugsweise Drei- oder Vierwalzenkalander, zu einer Folienbahn verformt wird, wobei die Temperatureinstellung der ersten, zweiten und dritten Walze, vorzugsweise zwischen 170 und 200 °C, die der vierten Walze zwischen 160 und 180 °C liegt.

18. Verfahren nach Ansprüchen 16 und 17, dadurch gekennzeichnet, daß die Einzelbahnen auf einem sog. Prägekalander hitzekaschiert werden und/oder bei mehrschichtigen Folien oder Verbundfolien die Oberfolie oder Oberschicht mit einer Oberflächenschicht oder Lackschicht im vorab versehen wird und nachfolgend auf die Unterfolie oder den Verbund oder auf den fertigen Verbund nach dem sog. Prägen aufgebracht wird.

**Claims**

1. A butadiene-free, deep-drawable film for the interiors of motor vehicles, having a film thickness of

250 $\mu$m - 1,800 $\mu$m, preferably

500 $\mu$m - 1,200 $\mu$m,

consisting of plastics mixtures or plastics alloys of

28 - 55% by weight

(relative to 100% by weight of the polymer mixture or the polymer alloy in the film or film layer) vinyl chloride homopolymer, copolymer, terpolymer and/or graft polymer,

37 - 6% by weight

of at least one plasticiser on the basis of a plasticising high polymer with polar groups which has a molecular weight of
more than 10,000, preferably
more than 30,000,
and at least one further butadiene-free polymer, preferably polymer free of acrylonitrile-butadiene-styrene copolymer (ABS-free), and optionally additives and/or processing aids and/or optionally with a foam layer or back-foaming located on the film or lower film, the film being constructed as a mono-film or as at least one layer of a composite film and the film or film layer containing in addition to the plasticising agent as butadiene-free polymer
21 - 37% by weight PMMA - A
polymethyl methacrylate-acrylic acid ester graft polymer (polymethyl methacrylate homopolymer and/or copolymer, grafted with acrylic acid ester) and
14 - 2% by weight
of at least one acrylic acid ester and/or methacrylic acid ester copolymer having a molecular weight of more than 50,000, which is preferably produced by copolymerisation of the acid esters with one another and/or with acrylonitrile.

2. A butadiene-free film according to Claim 1, characterised in that the acrylic and/or methacrylic acid ester copolymer has a molecular weight of more than 70,000.

3. A butadiene-free film according to Claims 1 and 2, characterised in that in the PMMA - A polymethyl methacrylate-acrylic acid ester graft polymer (polymethyl methacrylate homopolymer and/or copolymer, grafted with acrylic acid ester) contained in the film or film layer the content of the grafted-on acrylate is
40 - 90% by weight, preferably
50 - 85% by weight,
(calculated for 100% by weight PMMA - A (polymethyl methacrylate homopolymer or copolymer, grafted with acrylic acid ester).

4. A butadiene-free film according to one or more of Claims 1 to 3, characterised in that the grafted-on acrylic acid ester of the PMMA - A has ester groups with $C_2$ - $C_6$, and is preferably a butyl acrylate.

5. A butadiene-free film according to one or more of Claims 1 to 4, characterised in that the grafted-on acrylic acid ester of the PMMA - A with $C_2$ - $C_6$ ester groups, preferably butyl acrylate, is partially cross-linked and rubber-like.

6. A butadiene-free film according to one or more of Claims 1 to 5, characterised in that
up to 70% by weight, preferably
up to 50% by weight,
(relative to 100 parts by weight of acrylic and/or methacrylic acid ester copolymer used) of the acrylic and/or methacrylic acid ester copolymer, which is preferably produced by copolymerisation of the acid esters with each other and/or with acrylonitrile, is replaced by styrene-acrylonitrile copolymer (SAN).

7. A butadiene-free film according to one or more of Claims 1 to 6, characterised in that
up to 75% by weight, preferably
up to 60% by weight,
(calculated for 100% by weight PMMA - A) of the PMMA - A polymethyl methacrylate-acrylic acid ester graft polymer (polymethyl methacrylate homopolymer and/or copolymer, grafted with acrylic acid ester) contained in the film is replaced by acrylonitrile-styrene-acrylic acid ester graft polymer (ASA) or terpolymer.

8. A butadiene-free film according to one or more of Claims 1 to 7, characterised in that the film or film layer(s), relative to 100 parts by weight of the polymer mixture or polymer alloy, contains
2 - 20 parts by weight, preferably
3 - 15 parts by weight,
of one or more processing aids, preferably release agents, stabilisers, flowability improvement agents and/or antioxidants, and also
0 to 50 parts by weight, preferably
0.5 to 30 parts by weight,

12

of an additive or additive mixture, preferably at least one filler, at least one agent for rendering flame-resistant, at least one dye or colour pigment.

9. A butadiene-free film according to one or more of Claims 1 to 8, characterised in that the plasticising agent or plasticising agent mixture, which has polar groups, of the film, of the lower film and/or upper film has a molecular weight of more than 50,000 and consists of or contains at least one alkene or alkenyl-vinyl acetate-carbon monoxide terpolymer and/or alkene or alkenyl-vinyl acetate copolymer and/or alkene or alkenyl ($C_1$ - $C_4$)-alkyl ($C_1$ - $C_8$)-acrylate-carbon monoxide terpolymer, alkene or alkenyl ($C_1$ - $C_4$)-alkyl($C_1$ - $C_8$)-methacrylate-carbon monoxide terpolymer, alkene or alkenyl ($C_1$ - $C_4$)-alkyl ($C_1$ - $C_8$)-acrylate copolymer, alkene or alkenyl ($C_1$ - $C_4$)-alkyl ($C_1$ - $C_8$)-methacrylate copolymer, with randomly distributed vinyl acetate, acrylate or methacrylate groups or alkyl acrylate or alkyl methacrylate groups and also optionally (in the case of terpolymers) randomly distributed carbon monoxide groups, preferably ethylene-butyl acrylate-carbon monoxide terpolymer, ethylene-hexyl acrylate-carbon monoxide terpolymer, ethylene-butyl acrylate copolymer, ethylene-hexyl acrylate copolymer, ethylene-vinyl acetate-carbon monoxide terpolymer and/or ethylene-vinyl acetate copolymer.

10. A butadiene-free film according to one or more of Claims 1 to 9, characterised in that
up to 100% by weight, preferably
up to 60% by weight,
(relative to 100% by weight of the plasticiser or plasticiser mixture in the film or film layer) of the plasticiser or plasticiser mixture containing polar groups is replaced by a chlorinated polyethylene and/or polycaprolactone (PCL).

11. A butadiene-free film according to one or more of Claims 1 to 10, characterised in that the film consists of at least one lower film or lower layer and at least one upper film or upper layer, the qualitative and/or quantitative composition varying between the lower film(s) or lower layer(s) and upper film(s) or upper layer(s).

12. A butadiene-free film according to one or more of Claims 1 to 11, characterised in that the percentage content of vinyl chloride homopolymer, copolymer, terpolymer and/or graft polymer in the lower film(s) or lower layer(s) is less than that in the upper film(s) or upper layers (s) and/or that the percentage content of the plasticiser or plasticiser mixture containing polar groups in the lower film(s) or lower layer(s) is greater than that in the upper film(s) or upper layer(s).

13. A butadiene-free film according to one or more of Claims 1 to 12, characterised in that the composite film consisting of at least one lower film or lower layer and at least one upper film or upper layer contains at least one lower film or lower layer which (relative to 100% by weight polymer) consists of
28 - 55% by weight vinyl chloride homopolymer, copolymer, terpolymer and/or graft polymer and/or alloys on the basis of polyvinyl chloride,
21 - 37% by weight PMMA - A
polymethyl methacrylate-acrylic acid ester graft polymer (polymethyl methacrylate homopolymer and/or copolymer, grafted with acrylic acid ester), the content of the grafted-on acrylate being
40 - 90% by weight, preferably
50 - 85% by weight,
(calculated for 100% by weight PMMA - A (polymethyl methacrylate homopolymer and/or copolymer, grafted with acrylic acid ester)), consists of or contains
37 - 6% by weight
plasticiser or plasticiser mixture having polar groups of at least one alkene or alkenyl-vinyl acetate-carbon monoxide terpolymer and/or alkene or alkenyl-vinyl acetate copolymer and/or alkene or alkenyl ($C_1$ - $C_4$)-alkyl($C_1$ - $C_8$)-acrylate-carbon monoxide terpolymer, alkene or alkenyl ($C_1$ - $C_4$)-alkyl($C_1$ - $C_8$)-methacrylate-carbon monoxide terpolymer, alkene or alkenyl ($C_1$ - $C_4$)-alkyl($C_1$ - $C_8$)-acrylate copolymer, alkene or alkenyl ($C_1$ - $C_4$)-alkyl($C_1$ - $C_8$)-methacrylate copolymer, with randomly distributed vinyl acetate, acrylate or methacrylate groups or alkyl acrylate or alkyl methacrylate groups and also optionally (in the case of terpolymers) randomly distributed carbon monoxide groups, preferably ethylene-butyl acrylate-carbon monoxide terpolymer, ethylene-hexyl acrylate-carbon monoxide terpolymer, ethylene-butyl acrylate copolymer, ethylene-hexyl acrylate copolymer, ethylene-vinyl acetate-carbon monoxide terpolymer and/or ethylene-vinyl acetate copolymer and/or a chlorinated polyethylene and/or a polycaprolactone,

14 - 2 % by weight

of another polymer or polymer mixture, preferably at least one acrylic and/or methacrylic acid ester copolymer having a molecular weight of more than 50,000, which has preferably been produced by copolymerisation of the acid esters with one another and/or with acrylonitrile.

14. A butadiene-free film according to one or more of Claims 1 to 13, characterised in that the PMMA - A contained in the film or film layer is entirely or partially replaced by the same quantity by weight of polymethyl methacrylate-methacrylic acid ester graft polymer (polymethyl methacrylate homopolymer and/or copolymer, grafted with methacrylic acid ester).

15. A butadiene-free film according to one or more of Claims 1 to 14, characterised in that the upper layer or surface layer is covered on its free surface layer with a painted coating or plastic coating, preferably on the basis of acrylate resins, polyvinyl chloride-acrylate resins, polyurethane resins and/or epoxy resins.

16. A method for producing the butadiene-free film according to one or more of Claims 1 to 15, characterised in that the plastics mixture of the mono-film, upper and/or lower film which are optionally heated and plasticised in an extruder or other known plasticising devices, preferably single-screw or double-screw extruders, planetary roller extruders or plasticising units, together with the processing aids and/or additives, the plastics material being processed into sheets depending on the hardness setting at between

150°C and 210°C, preferably

160°C to 200°C

(stock temperature).

17. A method according to Claim 16, characterised in that the plastics-containing material, which is at a temperature of

150 - 210°C, preferably

160 - 200°C,

is formed into a film web by means of a multi-roll calender, preferably a three-roll or four-roll calender, the temperature setting of the first, second and third rollers being preferably between 170 and 200°C, and that of the fourth roller being between 160 and 180°C.

18. A method according to Claims 16 and 17, characterised in that the individual webs are heat-laminated on a so-called embossing calender and/or in the case of multi-layer films or composite films the upper film or upper layer is provided beforehand with a surface layer or paint layer and is subsequently applied to the lower film or the composite or onto the finished composite after the so-called embossing.

**Revendications**

1. Feuille exempte de butadiène emboutissable pour intérieurs de véhicules, d'une épaisseur de

250 à 1.800 micromètres, de préférence

500 à 1.200 micromètres,

feuille constituée de mélanges ou d'alliages de plastiques comprenant

28 - 55 % en poids

(par rapport à 100 % en poids du mélange ou de l'alliage de polymères dans la feuille ou la couche de la feuille) d'homopolymère, de copolymère, de terpolymère et/ou de polymère greffé de chlorure de vinyle,

37 à 6 % en poids

d'au moins d'un agent plastifiant à base d'un haut polymère plastifiant à groupements polaires, qui possède un poids moléculaire

supérieur à 10.000, de préférence

supérieur à 30.000, et

au moins un autre polymère exempt de butadiène, de préférence un polymère exempt de copolymère d'acrylonitrile, de butadiène et de styrène (exempt d'ABS), ainsi qu'éventuellement des additifs et/ou des adjuvants de mise en oeuvre et/ou éventuellement avec une couche ou contre-structure alvéolaire appliquée à la feuille ou à la feuille inférieure, la feuille étant conformée en monofeuille ou en au moins une couche d'une feuille composite, et la feuille ou la couche de la feuille contenant, outre l'agent plastifiant, comme polymère exempt de butadiène

    21 - 37 % en poids de PMMA - A,

polymère greffé de polyméthacrylate de méthyle et d'ester d'acide acrylique (homopolymère et/ou copolymère de polyméthacrylate de méthyle greffé par un ester d'acide acrylique) et

    14 à 2 % en poids

d'au moins un copolymère d'ester d'acide acrylique et/ou d'ester d'acide méthacrylique d'un poids moléculaire supérieur à 50.000, préparé de préférence par copolymérisation d'esters d'acides entre eux et/ou avec de l'acrylonitrile.

**2.** Feuille exempte de butadiène selon la revendication 1, caractérisée en ce que le copolymère d'ester d'acide acrylique et/ou d'ester d'acide méthacrylique possède un poids moléculaire supérieur à 70.000.

**3.** Feuille exempte de butadiène selon les revendications 1 et 2, caractérisée en ce que, dans le PMMA - A, polymère greffé de polyméthacrylate de méthyle et d'ester d'acide acrylique (homopolymère et/ou copolymère d'acrylate de méthyle greffé par de l'ester d'acide acrylique), contenu dans la feuille ou dans la couche de la feuille, la fraction d'acrylate greffé atteint

    40 à 90 % en poids, de préférence

    50 à 85 % en poids

(sur base de 100 % en poids de PMMA - A (homopolymère ou copolymère de polyméthacrylate de méthyle greffé par un ester d'acide acrylique)).

**4.** Feuille exempte de butadiène selon l'une ou plusieurs des revendications 1 à 3, caractérisée en ce que l'ester d'acide acrylique greffé du PMMA - A possède des groupes ester en $C_2$-$C_6$ et est de préférence un acrylate de butyle.

**5.** Feuille exempte de butadiène selon l'une ou plusieurs des revendications 1 à 4, caractérisée en ce que l'ester d'acide acrylique greffé du PMMA - A est partiellement réticulé par des groupes ester en $C_2$-$C_6$, de préférence de l'acrylate de butyle, et est caoutchouteux.

**6.** Feuille exempte de butadiène selon l'une ou plusieurs des revendications 1 à 5, caractérisée en ce que le copolymère d'ester d'acide acrylique et/ou d'ester d'acide méthacrylique, qui est préparé de préférence par copolymérisation d'esters d'acides entre eux et/ou avec de l'acrylonitrile, est remplacé

    jusqu'à 70 % en poids, de préférence

    jusqu'à 50 % en poids,

(par rapport à 100 parties en poids du copolymère d'ester d'acide acrylique et/ou d'ester d'acide méthacrylique utilisé) par un copolymère de styrène et d'acrylonitrile (SAN).

**7.** Feuille exempte de butadiène selon l'une ou plusieurs des revendications 1 à 6, caractérisée en ce que le copolymère greffé de polyméthacrylate de méthyle et d'ester d'acide acrylique PMMA - A (homopolymère et/ou copolymère de polyméthacrylate de méthyle greffé par un ester d'acide acrylique) contenu dans la feuille est remplacé

    jusqu'à 75 % en poids, de préférence

    jusqu'à 60 % en poids (par rapport à 100 % en poids de PMMA - A) par un polymère greffé ou un terpolymère greffé d'acrylonitrile, de styrène et d'ester d'acide acrylique (ASA).

**8.** Feuille exempte de butadiène selon l'une ou plusieurs des revendications 1 à 7, caractérisée en ce que la feuille ou la ou les couche(s) de la feuille contient ou contiennent, par rapport à 100 parties en poids du mélange ou de l'alliage de polymères,

    2 à 20 parties en poids, de préférence

    3 à 15 parties en poids,

d'un ou plusieurs adjuvants de mise en oeuvre, de préférence des lubrifiants, des stabilisants, des agents d'amélioration rhéologique et/ou des anti-oxydants, ainsi que

    0 à 50 parties en poids, de préférence

    0,5 à 30 parties en poids,

d'un additif ou d'un mélange d'additifs, de préférence au moins une charge, au moins un agent ignifugeant, au moins un colorant ou un pigment coloré.

**9.** Feuille exempte de butadiène selon l'une ou plusieurs des revendications 1 à 8, caractérisée en ce que le plastifiant et/ou le mélange de plastifiants présentant des groupements polaires de la feuille, de la feuille inférieure et/ou de la feuille supérieure, présente un poids moléculaire supérieur à 50.000 et est constitué de ou contient au moins un terpolymère d'alkène ou d'alkényle, d'acétate de vinyle et de monoxyde de carbone, et/ou un copolymère d'alkène ou d'alkényle et d'acétate de vinyle, et/ou un terpolymère d'alkène ou d'alkényle ($C_1$-$C_4$), d'acrylate d'alkyle ($C_1$-$C_8$) et de monoxyde de carbone, un terpolymère d'alkène ou d'alkényle ($C_1$-$C_4$), de méthacrylate d'alkyle ($C_1$-$C_8$) et de monoxyde de carbone, un copolymère d'alkène ou d'alkényle ($C_1$-$C_4$) et d'acrylate d'alkyle ($C_1$-$C_8$), un copolymère d'alkène ou d'alkényle ($C_1$-$C_4$) et de méthacrylate d'alkyle ($C_1$-$C_8$); avec des groupements d'acétate de vinyle, d'acrylate ou de méthacrylate ou des groupements d'acrylate d'alkyle ou de méthacrylate d'alkyle répartis de manière statistique, ainsi qu'éventuellement (dans le cas de terpolymères) des groupes de monoxyde de carbone répartis de manière statistique, de préférence un terpolymère d'éthylène, d'acrylate de butyle et de monoxyde de carbone, un terpolymère d'éthylène, d'acrylate d'hexyle et de monoxyde de carbone, un copolymère d'éthylène et d'acrylate de butyle, un copolymère d'éthylène et d'acrylate d'hexyle, un terpolymère d'éthylène, d'acétate de vinyle et de monoxyde de carbone, et/ou un copolymère d'éthylène et d'acétate de vinyle.

**10.** Feuille exempte de butadiène selon l'une ou plusieurs des revendications 1 à 9, caractérisée en ce que l'agent plastifiant ou le mélange d'agents plastifiants contenant des groupements polaires est remplacé

jusqu'à 100 % en poids, de préférence
jusqu'à 60 % en poids

(par rapport à 100 % en poids de l'agent plastifiant ou du mélange d'agents plastifiants dans la feuille ou dans la couche de la feuille) par un polyéthylène chloré et/ou un polycaprolactone (PCL).

**11.** Feuille exempte de butadiène selon l'une ou plusieurs des revendications 1 à 10, caractérisée en ce que la feuille est constituée d'au moins une feuille inférieure ou couche inférieure et d'au moins une feuille supérieure ou couche supérieure, les compositions qualitatives et/ou quantitatives de la (des) feuille(s) ou couche(s) inférieure(s) et de la (des) feuille(s) ou couche(s) supérieure(s) étant différentes.

**12.** Feuille exempte de butadiène selon l'une ou plusieurs des revendications 1 à 11, caractérisée en ce que le pourcentage en homopolymère, copolymère, terpolymère et/ou polymère greffé de chlorure de vinyle dans la ou les feuille(s) inférieure(s) ou dans la ou les couche(s) inférieure(s) est plus faible que celui de la ou des feuille(s) supérieure(s) ou de la ou des couche(s) supérieure(s), et/ou en ce que le pourcentage de l'agent plastifiant ou du mélange d'agents plastifiants contenant des groupements polaires est, dans la ou les feuille(s) inférieure(s) ou la ou les couche(s) inférieure(s), supérieur à celui de la ou des feuille(s) supérieure(s) ou de la ou des couche(s) supérieure(s).

**13.** Feuille exempte de butadiène selon l'une ou plusieurs des revendications 1 à 12, caractérisée en ce que la feuille composite constituée d'au moins une feuille inférieure ou couche inférieure et d'au moins une feuille supérieure ou couche supérieure comporte au moins une feuille inférieure ou couche inférieure constituée (par rapport à 100 parties en poids de polymère) de ou contenant

28 - 55 % en poids

d'homopolymère, de copolymère, de terpolymère et/ou de polymère greffé de chlorure de vinyle et/ou d'alliages à base de chlorure de polyvinyle, de

21 - 37 % en poids de PMMA - A,

polymère greffé de polyméthacrylate de méthyle et d'ester d'acide acrylique (homopolymère et/ou copolymère de polyméthacrylate de méthyle greffé par de l'ester d'acide acrylique), la fraction de l'acrylate greffé atteignant

40 - 90 % en poids, de préférence
50 - 85 % en poids

(par rapport à 100 % en poids de PMMA - A (homopolymère ou copolymère de polyméthacrylate de méthyle greffé par de l'ester d'acide acrylique)), de

37 - 6 % en poids

d'agent plastifiant ou de mélange d'agents plastifiants comportant des groupements polaires, constitué de ou comprenant au moins un terpolymère d'alkène ou d'alkényle, d'acétate de vinyle et de monoxyde de carbone, et/ou un copolymère d'alkène ou d'alkényle et d'acétate de vinyle, et/ou un terpolymère d'alkène ou d'alkényle ($C_1$-$C_4$), d'acrylate d'alkyle ($C_1$-$C_8$) et de monoxyde de carbone, un terpolymère d'alkène ou d'alkényle ($C_1$-$C_4$), de méthacrylate d'alkyle ($C_1$-$C_8$) et de monoxyde de carbone, un copolymère d'alkène ou d'alkényle ($C_1$-$C_4$) et d'acrylate d'alkyle ($C_1$-$C_8$), un copolymère d'alkène ou d'alkényle ($C_1$-$C_4$) et de méthacrylate d'alkyle ($C_1$-$C_8$); avec des groupements d'acétate de vinyle, d'acrylate ou de méthacrylate ou des groupements d'acrylate d'alkyle ou de méthacrylate d'alkyle répartis statistiquement, ainsi qu'éventuellement (dans le cas de terpolymères) des groupes de monoxyde de carbone répartis statistiquement, de préférence un terpolymère d'éthylène, d'acrylate de butyle et de monoxyde de carbone, un terpolymère d'éthylène, d'acrylate d'hexyle et de monoxyde de carbone, un copolymère d'éthylene et d'acrylate de butyle, un copolymère d'éthylène et d'acrylate d'hexyle, un terpolymère d'éthylène, d'acétate de vinyle et de monoxyde de carbone et/ou un copolymère d'éthylène et d'acétate de vinyle et/ou un polyéthylène chloré et/ou une polycaprolactone,

  14 - 2 % en poids

d'au moins un copolymère d'ester d'acide acrylique et/ou d'ester d'acide méthacrylique avec un poids moléculaire supérieur à 50.000, préparé de préférence par copolymérisation d'esters d'acides entre eux et/ou avec de l'acrylonitrile.

14. Feuille exempte de butadiène selon l'une ou plusieurs des revendications 1 à 13, caractérisée en ce que le PMMA - A contenu dans la feuille ou la couche de la feuille est remplacé en totalité ou en partie par la même quantité pondérale de polymère greffé de polyméthacrylate de méthyle et d'ester d'acide méthacrylique (homopolymère et/ou copolymère de polyméthacrylate de méthyle greffé par de l'ester d'acide méthacrylique).

15. Feuille exempte de butadiène selon l'une ou plusieurs des revendications 1 à 14, caractérisée en ce que la feuille supérieure ou la couche superficielle est enduite d'une couche de vernis ou d'un revêtement de matière plastique, de préférence à base de résines acrylate, de résines de chlorure de polyvinyle et d'acrylate, de résines polyuréthane et/ou de résines époxy, sur sa couche superficielle libre.

16. Procédé de fabrication de la feuille exempte de butadiène selon l'une ou plusieurs des revendications 1 à 15, caractérisé en ce que le mélange plastique de la monofeuille, de la feuille supérieure et/ou de la feuille inférieure est chauffé et plastifié dans une extrudeuse ou d'autres dispositifs de plastification connus en soi, de préférence des extrudeuses à vis unique ou à double vis, des extrudeuses à rouleaux satellites ou des appareils de plastification, éventuellement conjointement avec les adjuvants de mise en oeuvre et/ou les additifs, et la masse plastique est convertie en feuilles entre

  150 et 210°C, de préférence

  160 à 200°C

(température massique) selon le réglage de la dureté.

17. Procédé selon la revendication 16, caractérisé en ce que la masse plastique chaude à

  150 - 210°C, de préférence

  160 - 200°C,

est formée en bande par une calandre à rouleaux multiples, de préférence une calandre à trois ou quatre rouleaux, le réglage de la température du premier, du second et du troisième rouleaux se situant de préférence entre 170 et 200°C tandis que celle du quatrième rouleau est comprise en 160 et 180°C.

18. Procédé selon les revendications 16 et 17, caractérisé en ce que les bandes individuelles sont laminées à chaud dans ce que l'on appelle une calandre de grainage et/ou en ce que, dans le cas de feuilles à plusieurs couches ou feuilles composites, la feuille supérieure ou la couche supérieure est dotée préalablement d'une couche superficielle ou d'une couche de vernis et, ensuite, est appliquée sur la feuille inférieure ou sur la feuille composite ou sur la feuille composite après le grainage précité.

# FIG.1

# FIG.2

# FIG.3

# FIG.4

# FIG.5